# EUROPÄISCHE PATENTSCHRIFT

(11) **EP 1 561 954 B1**
(45) Veröffentlichungstag und Bekanntmachung des Hinweises auf die Patenterteilung: **21.11.2007**
(21) Anmeldenummer: 04290300.5
(22) Anmeldetag: 05.02.2004
(51) Int. Cl.: F16B 2/24, F16B 5/06

(54) **Verbindungselement zum lösbaren Verbinden von sich teilweise überlappenden Teilen sowie ein derartige Verbindungselemente aufweisendes Gehäuse und ein Verfahren zum lösbaren Verbinden von sich wenigstens teilweise überlappenden Teilen**
Connection element for a detachable connecting of partly overlapping parts as well as such a connection element in a housing and a procedure for detachable connecting of at least partly overlapping parts
L'élément de raccordement pour se relier détachable des pièces chevauchant en partie, aussi bien qu'un tel élément de raccordement dans un logement et un procédé pour se relier détachable au moins des pièces au moins en partie chevauchant

(43) Veröffentlichungstag der Anmeldung: 10.08.2005
(73) Patentinhaber: Lisi Automotive Rapid, 95650 Puiseux Pontoise (FR)
(72) Erfinder: Demel, Otto, 69123 Heidelberg (DE)
(74) Vertreter: Thinat, Michel

(56) Entgegenhaltungen:
- EP-A- 0 990 803
- GB-A- 1 144 927
- US-A- 4 179 791

## Beschreibung

Die vorliegende Erfindung betrifft ein Verbindungselement zum lösbaren Verbinden von mindestens zwei in einem Verbindungsbereich plattenförmigen, sich wenigstens teilweise überlappenden Teilen nach dem Oberbegriff des Anspruchs 1, sowie ein derartige Verbindungselemente aufweisendes Gehäuse nach dem Oberbegriff des Anspruchs 6 und ein Verfahren zum lösbaren Verbinden von mindestens zwei in einem Verbindungsbereich plattenförmigen, sich wenigstens teilweise überlappenden Teilen nach dem Oberbegriff des Anspruchs 7.

Im Rahmen der vorliegenden Erfindung werden unter dem Begriff « Gehäuse » so unterschiedliche Gebilde wie etwa ein Schaltschrank einer elektronischen Einrichtung, ein Gehäuse eines Gerätes und eine Karosserie eines Kraftfahrzeugs verstanden, soweit sie aufgrund ihres Anwendungsbereiches gleichartigen Belastungen, wie zum Beispiel Schwingungen, unterliegen.

Bei all diesen Gehäusen geht es darum, ein oder mehrere plattenförmige Teile an einem wenigstens im Befestigungs- bzw. Verbindungsbereich flachen, plattenförmigen Teil einer Grundstruktur zu befestigen. Die Befestigung soll z.B. vibrationsfest sein und nicht als Schraubverbindung ausgelegt sein, weil eine solche in vibrationsfester Version sehr kostenträchtig ist.

Ein weiterer Grund dafür, daß die vorliegende Erfindung auf sehr unterschiedlichen technischen Gebieten Anwendung finden kann, liegt in der auf diesen unterschiedlichen Gebieten zu erfüllenden gemeinsamen praktischen Forderung nach schneller Abnehmbarkeit der Teile, da zum Beispiel Abdeckplatten oder Verkleidungen im Rahmen von Wartungsarbeiten schnell abnehmbar sein müssen.

Der Erfindung liegt somit die Aufgabe zugrunde, ein Verbindungselement vorzuschlagen, das geeignet ist, Teile lösbar miteinander zu verbinden, die mindestens in einem Verbindungsbereich plattenförmig ausgebildet sind und sich wenigstens teilweise überlappen.

Diese Aufgabe wird mit den Merkmalen des kennzeichnenden Teils des Anspruchs 1 gelöst. Die Aufgabe wird ferner durch ein Gehäuse gelöst, das Verbindungselemente nach Anspruch 1 aufweist, sowie durch ein Verfahren zum lösbaren Verbinden von Teilen gemäß den Merkmalen des Anspruchs 7.

Das erfindungsgemäße Verbindungselement an sich weist zwei Komponenten auf, und zwar einen Deckel, der auf die miteinander zu verbindenden Teile aufgesetzt wird, und eine Spange, die den Deckel und die miteinander zu verbindenden Teile durchgreift, um den Deckel auf die Teile zu pressen. Die Spange ist dazu federkraftbewehrt.

Der Deckel, der z.B. rechteckig oder aber auch rund sein kann, weist einen umlaufenden Steg auf, um zwischen der Hauptfläche des Deckels und dem ersten der miteinander zu verbindenden Teile, auf dem der Deckel aufgesetzt wird, einen Raum zu schaffen, in den die Spange eingreifen kann. Vorteilhafterweise, aber nicht notwendigerweise bildet der Steg einen Rand des Deckels. Der Zugang zu dem vorgenannten Raum erfolgt für die Spange über zwei parallel zueinander angeordnete und voneinander beabstandete Schlitze in der Hauptfläche des Deckels.

Die Spange des erfindungsgemäßen Verbindungselements ist aus bandförmigem, federndem Material und in etwa U-förmig ausgebildet und weist zwei unterschiedlich lange Schenkel auf, von denen der längere Schenkel den Deckel und alle miteinander zu verbindenden Teile durchgreift und von denen der kürzere Schenkel nur den Deckel durchgreift.

Die Spange kann sowohl aus federndem Stahl als auch aus einem weitgehend bruchfesten, hinreichend elastischen Kunststoff gefertigt sein.

Weitere Merkmale und Vorteile der Erfindung ergeben sich aus der nachfolgenden Beschreibung eines Ausführungsbeispiels der Erfindung. Die Beschreibung erfolgt anhand der beigefügten Zeichnungen, in denen :
die Figuren 1 und 2 ein erfindungsgemäßes Verbindungselement und zwei mit diesem verbundende Teile im Längsschnitt zeigen, und zwar die Figur 1 während des Verbindungsvorgangs und die Figur am Ende desselben;
die Figur 3 ein erfindungsgemäßes Verbindungselement und fünf mit diesem verbundende Teile im Längsschnitt zeigt;
die Figuren 4 und 5 das Verbindungselement der Figur 1 in schräger Draufsicht bzw. schräger Untenansicht zeigen und
die Figur 6 eine runde Variante des Verbindungselementes der Figur 1 zeigt.

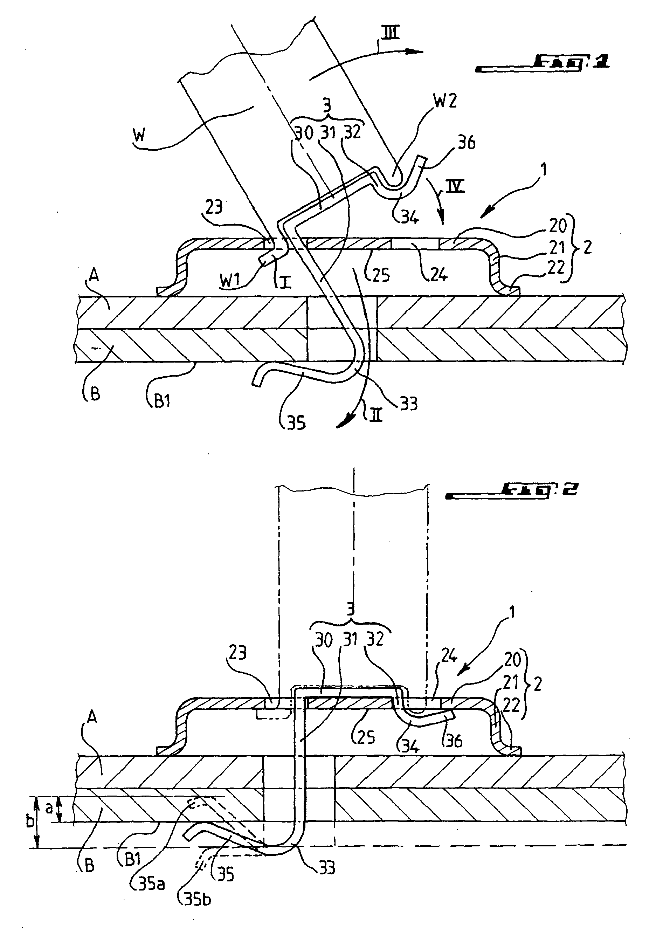

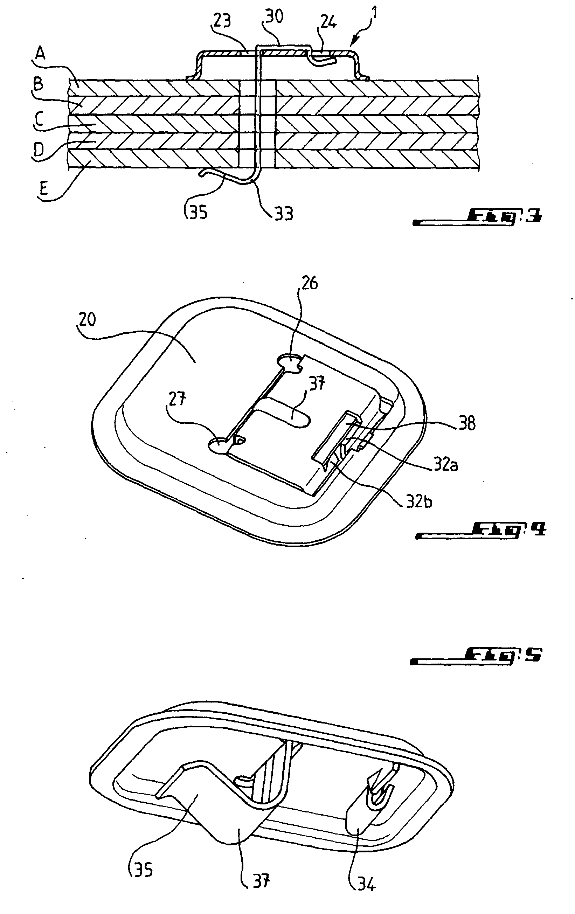

Das in den Figuren 1 und 2 in einem Längsschnitt dargestellte erfindungsgemäße Verbindungselement 1 wird beispielsweise zum lösbaren Verbinden von zwei sich teilweise überlappenden Teilen A, B verwendet. Es besteht aus einem auf die miteinander zu verbindenden Teile A, B aufzusetzenden Deckel 2 und einer den Deckel und die Teile A, B durchgreifenden Spange 3. Während Figur 1 das Verbindungselement während eines Verbindungsvorgangs zeigt, stellt Figur 2 das Verbindungselement am Ende des Vorgangs dar.

Zum Herstellen der Verbindung zwischen den beiden Teilen A, B wird der Deckel 2 in einem Bereich, in dem sie überlappen, auf eines der beiden Teile aufgesetzt und die Spange 3 in weiter unten beschriebender Weise durch den Deckel und die Teile A, B bis zum Einrasten hindurchgeführt.

Der Deckel 2 weist einen eine Deckelfläche 20 bildenden flachen Teil und einen umlaufenden Steg 21 auf, der den äußeren Rand des Deckels bildet und sich direkt an die Deckelfläche 20 anschließt. Der Rand 21 geht in einen nach außen kragenden umlaufenden Abschnitt 22 über, der so ausgebildet ist, daß er mit dem Rand 21 zusammen ein Federelement des Deckels 2 bildet. Die Federkraft dieses Federelements ist so zu bemessen, daß der Deckel 2 hinreichend nachgibt, um das Einsetzen der Spange 3 zu ermöglichen, daß er anschließend aber genug Rückstellkraft aufbringt, um die Spange 3 in weiter unten beschriebener Weise zu spannen.

Der Deckel 2 weist weiterhin in der Deckelfläche 20 zwei zueinander parallele und voneinander beabstandete Schlitze 23, 24 auf, durch die die Spange 3 hindurchgeführt wird.

Die Spange 3 ist aus bandförmigem, federndem Material, vorteilhafterweise aus federndem Stahl, hergestellt und in etwa U-förmig ausgebildet. Die Spange 3 weist zwei unterschiedlich lange Schenkel 31, 32 auf, die über einen Querabschnitt 30 an deren einen Enden miteinander verbunden sind. Die beiden Schenkel 31, 32 sind an deren anderen, freien Enden 33, 34 zurückgebogen, um mit sich daran anschließenden Abschnitten 35, 36 Federelemente zu bilden, dank derer sich der längere Schenkel 31 auf einer vom Deckel 2 abgewandten Seite B1 des Teils B federnd abstützt und sich der kürzere Schenkel 32 auf der Innenseite 25 des Deckels 2 federnd abstützt.

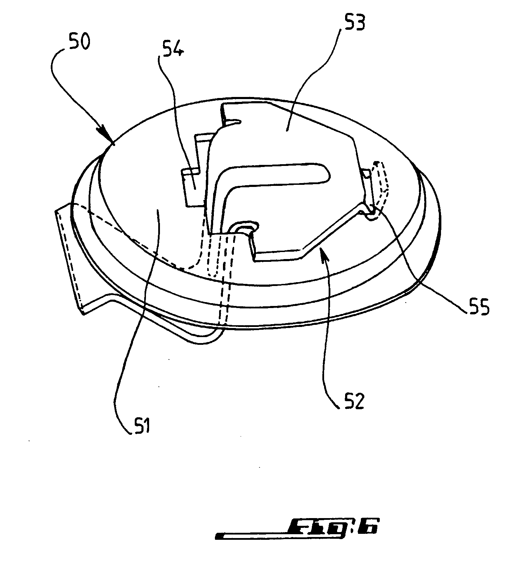

Die Figur 3 zeigt den Fall, daß insgesamt fünf Teile miteinander verbunden werden, zum Beispiel eine Schutzplatte A mit einer weiteren Schutzplatte C, mit jeweiliger Dämmplatte B bzw. D, die an einem Gestellteil oder Karosserieteil E befestigt sind. Dabei ist die Anordnung so gedacht, daß die Dämmplatte B zwischen der Schutzplatte A und der Schutzplatte C und die Dämmplatte D zwischen der Schutzplatte C und dem Karosserieteil B angeordnet ist. Die Schutzplatten A, C bilden eine fortlaufende Schutzfläche eines Gestellschrankes oder einer Fahrzeugkarrosserie. Die Gesamtdicke dieser Anordnung übersteigt dabei diejenige der Anordnung nach Figur 2 wesentlich. Der daraus für das Verbindungselement 1 resultierende Unterschied betrifft in der Hauptsache die Spange 3, und zwar insbesondere die erforderliche wirksame Länge des längeren Schenkels 31. Diese kann auf zwei verschiedene Weisen erhalten werden.

Gemäß der aus Figur 3 ersichtlichen Weise wird die erforderliche größere wirksame Länge des Schenkels 31 dadurch erhalten, daß der Schenkel selbst länger ausgebildet ist. Gegebenenfalls erfordert die größere Schenkellänge eine etwas größere Breite des Schlitzes 23, um die Spange 3 problemlos einsetzen zu können.

Gemäß der aus Figur 2 ersichtlichen Weise kann die wirksame Länge des Schenkels 31 aber auch dadurch verändert werden, daß der Schenkel über den elastischen Bereich hinaus beansprucht wird. In Figur 2 ist dazu die Dicke des Teils B, das mit dem Teil A verbunden ist, mit drei verschiedenen Maßen dargestellt. Dabei ist die mittlere Dicke des Teils B durch die durchgezogene, die Unterseite B1 darstellende Linie angegeben. Die Fälle geringerer bzw. größerer Dicke des Teils B sind durch gestrichelte Linien dargetellt, auf denen die ebenfalls gestrichelt dargestellten Enden 35a bzw. 35b des Schenkels 31 aufliegen.

Im Fall geringer Dicke des Teils B wird das Ende des Schenkels 31 der Spange 3 kaum elastisch verformt, um fest auf der Unterseite des Teils B aufzuliegen. Das freie Ende des Schenkels 31 nimmt dann die mit 35a bezogene Stellung ein.

Nimmt das Teil B die als mittleres Maß angegebene Dicke an, die um den Betrag a größer ist als die geringe Dicke, dann wird das freie Ende des Schenkels 31 elastisch verformt und nimmt die mit 35 bezogene Stellung ein.

Nimmt das Teil B die als größtes Maß angegebene Dicke an, die um den Betrag b größer ist als die geringe Dicke, dann wird das freie Ende des Schenkels 31 über den elastischen Bereich hinaus plastisch beansprucht, aber nur soweit, daß keine dauerhafte Verformung auftritt, sondern noch eine elastische Restfederkraft verbleibt. Das freie Ende 35b wird dabei nur soweit beansprucht, daß der zwischen dem freien Ende 35b und dem Schenkel 31 eingeschlossene Winkel, in Abhängigkeit von den elastischen Eigenschaften des Materials der Spange 3, einen rechten Winkel nicht oder zumindest nicht wesentlich übersteigt.

Bei den in den Figuren 1 bis 3 dargestellten Anwendungsbeispielen wird die in den Figuren 4 und 5 dargestellte Spange 3 verwendet. Das Einsetzen der Spange 3 erfolgt dabei in der aus Figur 1 ersichtlichen Weise.

Zunächst wird der Deckel 2 auf die miteinander zu verbindenden Teile A, B gesetzt, wobei diese Teile zuvor mit einem beide Teile durchdringenden Schlitz 23a versehen worden sind, der mindestens so lang wie der Schlitz 23 des Deckels 2, aber breiter als dieser Schlitz 23 ist. Die Breite des Schlitzes 23a ist so gewählt, daß der Schenkel 31 der Spange 3 in seinem endgültig geformten spannungslosen Zustand hindurch geführt werden kann (Handgriff I). Zum Einsetzen des Schenkels 31 wird der Deckel 2 so aufgesetzt, daß der Schlitz 23 in der in Figur 1 dargestellten Weise gegenüber dem Schlitz 23a versetzt ist.

Anschließend wird der kürzere Schenkel 23 in den Schlitz 24 des Deckels 2 eingedrückt, bis er einrastet (Handgriffe II und III). Dabei wird die Spange 3 aus ihrer schrägen Einsetzposition in die vertikale Einrast- und Verspannungsposition geschwenkt.

Das Einsetzen der Spange 3 und insbesondere das Verschwenken der Spange 3, bei dem der Deckel 2 so verschoben wird, daß der Schlitz 23 über den Schlitz 23a zuliegen kommt, wird vorteilhafterweise mit einem Werkzeug W durchgeführt.

Das im wesentlichen stangenförmig ausgebildete Werkzeug W weist an dem auf die Spange 3 aufzusetzende Ende an der einen Kante zwei hakenförmige Ausbildungen W1 und an der gegenüberliegenden Kante zwei in Längsrichtung des Werkzeugs W verlaufende Nasen W2 auf. Das Werkzeug W wird mit den Ausbildungen W1 in Löcher 26, 27 der Deckelfläche 20 eingesetzt. Der Abstand zwischen den hakenförmigen Ausbildungen W1 und den Nasen W2 entspricht der Breite des Querabschnitts 30 der Spange 3.

Wie aus Figur 4 zu ersehen ist, sind die Löcher 26, 27 in beidseitiger Verlängerung des Schlitzes 23 des Deckels 2 angebracht. Diese Ausführungsform vermeidet, den Schlitz 23 unnötig breit ausführen zu müssen. Desweiteren zeigt die Figur 4 zusammen mit der Figur 5, daß die Spange 3 vorteilhafterweise mit einer stabilisierenden Versteifungsrippe 37 versehen ist, die in Längsrichtung der Spange 3 mittig und etwa von der Mitte des Querteils 30 der Spange 3 bis zum Ende des nicht zurückgebogenen Teils des Schenkels 31 der Spange 3 verläuft. Damit wird eine Winkelsteifigkeit zwischen dem Querteil 30 und dem längeren Schenkel 31 der Spange 3 erreicht.

Die zum Erzielen der Verspannungswirkung erforderliche Federkraft des Schenkels 31 kommt also nur von dem elastisch verformbaren Endabschnitt 35 des längeren Schenkels 31 der Spange 3. Damit das Verbindungselement 1 zur Verbindung von zwei oder mehr Platten mit unterschiedlicher Gesamtstärke verwendet werden kann, ohne die Spange über den elastischen Verformungsbereich hinaus zu belasten und ohne daß die Anpreßkraft des Schenkels 31 durch Materialermüdung nachlässt, weil der Schenkel bis an die Grenze der elastischen Verformung belastet wird, kann die Spange 3 vorteilhafterweise in zwei oder mehr Ausführungen mit einem Schenkel 31 in verschiedenen Längen hergestellt werden.

Die Ausbildung des kürzeren Schenkels 32 der Spange 3 unterscheidet sich deutlich von der des längeren Schenkels 31. Dies liegt einerseits darin begründet, daß der Schenkel 32 wesentlich kürzer ist, da er nur den Deckel 2 zu durchgreifen hat und außerdem unmittelbar auf der Innenseite des Deckels 2 einrasten soll. Andererseits kommt dem Schenkel 32 aber die Aufgabe des lösbaren Einrastens der Spange 3 zu. Zu diesem Zweck weist der kürzere Schenkel 32, wie aus Figur 4 ersichtlich, eine im wesentlichen T-förmige Aussparung 38 auf. Dank dieser Aussparung 38 wird der Schenkel 32 in einem kurzen Bereich in zwei Abschnitte 32a, 32b aufgeteilt. Dabei ist einer der beiden Abschnitte, in Figur 4 der Abschnitt 32b, zum längeren Schenkel 31 hin gebogen, so daß die Spange 3 nach Einrasten des Schenkels 32 unter dem Deckel 2 zusätzlich gesichert ist.

Zum Lösen der Verriegelung wird, z.B. mit einem kleinen Schraubendreher, der Abschnitt 32b durch elastische Verformung unter dem Deckel 2 hervorgeholt und dann der zurückgebogene Abschnitt 36 des kleinen Schenkels 32 ebenfalls unter dem Deckel 2 hervorgeholt und so die Spange 3 wieder aus dem Deckel 2 ausgerastet. Anschließend wird die Spange 3 durch den Schlitz 23a der verbundenden Teile A, B und den Schlitz 23 des Deckels 2 herausgezogen. Zuletzt wird der Deckel 2 vom Teil A abgenommen.

Die Figur 6 zeigt eine Variante des erfindungsgemäßen Verbindungselements 1, das Verbindungselement 50 mit rundem Deckel 51. Der Aufbau des Verbindungselements 50 entspricht weitgehend dem des Verbindungselements 1. Der wesentliche Unterschied liegt aufgrund der runden Deckelform in der Ausbildung der Spange 52, die ein im wesentlichen trapezförmiges Querteil 53 aufweist.

Während beim Verbindungselement 1 der Deckel 2 zwei etwa gleich lange Schlitze aufweist, weist der Deckel 51 des Verbindungselements 50 einen längeren Schlitz 54 zur Aufnahme des längeren Schenkels der Spange 52 und einen kürzeren Schlitz 55 zur Aufnahme des kürzeren Schenkels der Spange 52 auf.

Das Verfahren zum Herstellen einer lösbaren Verbindung mit wenigstens einem Verbindungselement 50 ist das gleiche wie das zuvor beschriebene Verfahren unter Anwendung eines Verbindungselementes 1.

In entsprechender Weise erfolgt das Auflösen der Verbindung wenigstens zweier Teile, die mittels eines Verbindungselementes 50 verbunden sind, dem ebenfalls weiter oben beschrieben Verfahren zur Auflösung einer mit einem Verbindungselement 1 hergestellten Verbindung.

## Patentansprüche

1. Verbindungselement (1, 50) zum lösbaren Verbinden von mindestens zwei in einem Verbindungsbereich plattenförmigen, sich wenigstens teilweise überlappenden Teilen (A, B),
**dadurch gekennzeichnet, daß** es einen auf die miteinander zu verbindenden Teile (A, B) aufzusetzenden Deckel (2, 51) und eine den Deckel und die miteinander zu verbindenden Teile durchgreifende federkraftbewehrte Spange (3, 52) zum Pressen des Deckels auf die Teile aufweist, wobei der Deckel (2) einen umlaufenden, eine Federkraft aufweisenden Steg (21, 22) und zwei zueinander parallele, voneinander beabstandete Schlitze (23, 24) zur Aufnahme der Spange (3) aufweist.

2. Verbindungselement nach Anspruch 1,
**dadurch gekennzeichnet, daß** die Spange (3) aus bandförmigem, federndem Material in etwa U-förmig geformt ist und zwei unterschiedlich lange, an deren freien Enden (33, 34) zurückgebogene Schenkel (31, 32) aufweist, von denen der längere (31) so bemessen ist, daβ er den Deckel (2) und die miteinander zu verbindenden Teile (A, B) durchgreift und sich auf einer vom Deckel (2) abgewandten Seite (B1) des letztdurchgriffenen Teils (B) federnd abstützt, und der kürzere (32) so bemessen ist, daß er nur den Deckel (2) durchgreift und sich auf der Innenseite (25) des Deckels (2) federnd abstützt.

3. Verbindungselement nach Anspruch 2,
**dadurch gekennzeichnet, daß** der kürzere Schenkel (32) der Spange (3) so geformt ist, daß die Verbindung der Teile (A, B) durch Eingriff auf die Spange (3) durch den Schlitz (24) des Deckels, durch den der kürzere Schenkel (32) der Spange geführt ist, lösbar ist.

4. Verbindungselement nach einem der Ansprüche 1 bis 3,
**dadurch gekennzeichnet, daß** die Spange (3) aus Stahl gefertigt ist.

5. Verbindungselement nach einem der Ansprüche 1 bis 3,
**dadurch gekennzeichnet, daß** die Spange (3) aus Kunststoff gefertigt ist.

6. Gehäuse, **dadurch gekennzeichnet, daß** es Verbindungselemente (1, 50) nach einem der Ansprüche 1 bis 5 aufweist.

7. Verfahren zum lösbaren Verbinden von mindestens zwei in einem Verbindungsbereich plattenförmigen, sich wenigstens teilweise überlappenden Teilen (A, B) mittels wenigstens eines Verbindungselementes (1, 50) nach einem der Ansprüche 1 bis 5,
**gekennzeichnet durch** folgende Schritte:
- Aufsetzen des Deckels (2) auf die miteinander zu verbindenden Teile (A, B), wobei diese zuvor mit einem alle Teile durchdringenden Schlitz (23a), der etwa so lang, aber breiter als einer der Schlitze (23) des Deckels (2) ist, versehen worden sind,
- Einsetzen des längeren Schenkels (31) des Verbindungselementes (1, 50) in den den Deckel (2) und die Teile (A, B) durchdringenden Schlitz (23, 23a),
- Eindrücken des kürzeren Schenkels (32) des Verbindungselementes in den anderen Schlitz (24) des Deckels (2) bis zum Einrasten des kürzeren Schenkels (32).

## Claims

1. Connection element (1, 50) for the detachable connecting of at least two plate-shaped parts (A, B) at least partly overlapping in a connection area,
**characterized in that** it has a cover (2, 51) to be placed on the parts (A, B) to be connected, and a spring-loaded clasp (3, 52) clamping the cover and the parts to be connected with each other for pressing the cover onto the parts, wherein the cover (2) has a circumferential spring-loaded bar (21, 22), and two slots (23, 24) that are parallel to each other, and are at a distance from each other for receiving the clamp (3).

2. Connection element according to claim 1,
**characterized in that** the clamp (3) formed in an approximate U-shape is made of a ribbon-shaped, resilient material, and has at its free ends (33, 34) two side pieces (31, 32) that are bent backwards, and are of different lengths, of which the longer one (31) is dimensioned in such a manner that it down-clamps the cover (2) and the parts (A, B) to be connected to each other, and is spring-supported at a side (Bl) of the last down-clamping part (B), which is opposite of the cover (2), and the shorter one (32) is dimensioned in such a manner that it only down-clamps the cover (2), and is spring-supported at the interior side (25) of the cover (2).

3. Connection element according to claim 2,
**characterized in that** the shorter side piece (32) of the clamp (3) is shaped so that the connection of the parts (A, B) can be released by engaging the clamp (3) through the slot (24) of the cover, through which the shorter side piece (32) of the clamp is guided.

4. Connection element according to one of the claims 1 to 3,
**characterized in that** the clamp (3) is made of steel.

5. Connection element according to one of the claims 1 to 3,
**characterized in that** the clamp (3) is made of plastic.

6. Housing, **characterized in that** it has connection elements (1, 50) according to one of the claims 1 to 5.

7. Method for the detachable connecting of at least two plate-shaped parts (A, B) at least partly overlapping in a connection area by means of at least one connection element (1, 50) according to one of the claims 1 to 5,
**characterized by** the following steps:
- placing of the cover (2) on the parts (A, B) to be connected to each other, wherein they have previously been provided with a slot (23a) penetrating all of the parts, which is approximately as long as, but wider than one of the slots (23) of the cover (2),
- inserting the longer side piece (31) of the connection element (1, 50) into the cover (2), and the slot (23, 23a) penetrating the parts (A, B),
- pushing in the shorter side piece (32) of the connection element into the other slot (24) of the cover (2) until the shorter side piece (32) has fully engaged.

## Revendications

1. Élément d'assemblage (1, 50) pour un assemblage amovible entre au moins deux parties (A, B) en forme de plaques, se chevauchant au moins partiellement,
**caractérisé en ce qu'**il comporte un couvercle (2, 51), à poser sur les parties (A, B) à assembler entre elles, et une agrafe (3, 52) renforcée par une force de ressort, laquelle passe à travers le couvercle et les parties à assembler entre elles et est destinée à presser le couvercle sur lesdites parties, le couvercle (2) comportant une nervure (21, 22) périphérique, ayant une force de ressort, et deux fentes (23, 24), parallèles entre elles, écartées l'une de l'autre et destinées à recevoir l'agrafe (3).

2. Élément d'assemblage selon la revendication 1, **caractérisé en ce que** l'agrafe (3) est réalisée sensiblement en forme de U dans un matériau flexible en forme de bande et comporte deux branches (31, 32) de longueur différente, recourbées au niveau de leurs extrémités libres (33, 34), parmi lesquelles la branche la plus longue (31) est dimensionnée de telle sorte qu'elle passe à travers le couvercle (2) et les parties (A, B) à assembler entre elles et prend appui de manière flexible sur une face (B1), détournée du couvercle (2), de la partie (B) traversée en dernier lieu, et la branche la plus courte (32) est dimensionnée de telle sorte qu'elle passe uniquement à travers le couvercle (2) et prend appui de manière flexible sur la face intérieure (25) du couvercle (2).

3. Élément d'assemblage selon la revendication 2, **caractérisé en ce que** la branche la plus courte (32) de l'agrafe (3) est formée de telle sorte que l'assemblage entre les parties (A, B) peut être désolidarisé en poussant sur l'agrafe (3) à travers la fente (24) du couvercle, à travers laquelle passe la branche la plus courte (32).

4. Élément d'assemblage selon l'une quelconque des revendications 1 à 3, **caractérisé en ce que** l'agrafe (3) est réalisée en acier.

5. Élément d'assemblage selon l'une quelconque des revendications 1 à 3, **caractérisé en ce que** l'agrafe (3) est réalisée en matière plastique.

6. Boîtier **caractérisé en ce qu'**il comporte des éléments d'assemblage (1, 50) selon l'une quelconque des revendications 1 à 5.

7. Procédé pour un assemblage amovible entre au moins deux parties (A, B) en forme de plaques se chevauchant au moins partiellement, au moyen d'au moins un élément d'assemblage (1, 50) selon l'une quelconque des revendications 1 à 5,
**caractérisé par** les étapes suivantes :
- pose du couvercle (2) sur les parties (A, B) à assembler entre elles, celles-ci ayant été munies au préalable d'une fente (23a), qui passe à travers toutes les parties et qui est à peu près aussi longue, mais plus large que l'une des fentes (23) du couvercle (2),
- introduction de la branche la plus longue (31) de l'élément d'assemblage (1, 50) dans la fente (23, 23a) passant à travers le couvercle (2) et les parties (A, B),
- enfoncement de la branche la plus courte (32) de l'élément d'assemblage dans l'autre fente (24) du couvercle (2) jusqu'au blocage de la branche la plus courte (32).
